(19) Europäisches Patentamt
European Patent Office
Office européen des brevets

(11) EP 4 729 555 A1

(12) EUROPEAN PATENT APPLICATION
published in accordance with Art. 153(4) EPC

(43) Date of publication:
22.04.2026 Bulletin 2026/17

(51) International Patent Classification (IPC):
C08G 63/16 (2006.01)   C08G 63/78 (2006.01)
C08G 63/85 (2006.01)   C08K 5/49 (2006.01)

(21) Application number: 24826141.4

(22) Date of filing: 22.05.2024

(86) International application number:
PCT/KR2024/006900

(87) International publication number:
WO 2024/262819 (26.12.2024 Gazette 2024/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.06.2023 KR 20230078538

(71) Applicants:
• SK Innovation Co., Ltd.
  Seoul 03188 (KR)
• SK Geo Centric Co., Ltd.
  Jongno-gu
  Seoul 03161 (KR)

(72) Inventors:
• KIM, Jeongsun
  Seoul 07793 (KR)
• IM, Sujin
  Seoul 07793 (KR)
• HWANG, Yeongnam
  Seoul 07793 (KR)
• KIM, Seonghun
  Seoul 07793 (KR)
• PAEK, Seunghwan
  Seoul 07793 (KR)
• LEE, Sungwon
  Seoul 07793 (KR)
• NAM, Joohyun
  Seoul 03188 (KR)

(74) Representative: Lorenz Seidler Gossel Part. mbB
Widenmayerstr. 23
80538 München (DE)

(54) **BIODEGRADABLE POLYESTER RESIN AND PREPARATION METHOD THEREOF**

(57) The present invention relates to a biodegradable polyester resin and a preparation method thereof. Provided is a biodegradable polyester resin composition comprising: polyester resin particles containing a dicarboxylic acid component residue and a diol component residue; a titanium (Ti)-based catalyst; and a phosphorus (P)-based heat stabilizer, wherein polyester resin particles with a size of 20 nm or larger as measured by DLS are contained in 10 mass% or less with respect to the total amount (100 mass%) of the biodegradable polyester resin composition, and the titanium (Ti)-based catalyst and the phosphorus (P)-based heat stabilizer satisfy mathematical formula 1. [Mathematical formula 1] $1 < [A]/[B] < 20$, where [A] is the weight (ppm) of titanium (Ti) contained in the titanium (Ti)-based catalyst, and [B] is the weight (ppm) of phosphorus (P) contained in the phosphorus (P)-based heat stabilizer.

## Description

[Technical Field]

The present disclosure relates to a biodegradable polyester resin and a method for preparing the same.

[Background Art]

The polyester resin refers to a polymer resin having an ester (RO-C(=O)-R') functional group in the main chain, and is used for various applications such as packaging materials, display materials, and insulating materials in a wide range of industrial fields. In recent years, studies on biodegradable polyester compositions have been conducted in consideration of environmental protection issues.

In general, a biodegradable polyester composition is prepared using an aliphatic dicarboxylic acid, an aromatic dicarboxylic acid, and an aliphatic diol as main raw materials, and a branching agent, a titanium (Ti)-based catalyst, and a phosphorus (P)-based thermal stabilizer as auxiliary raw materials.

Specifically, a biodegradable polyester composition is prepared by subjecting the main raw materials to an esterification reaction and a polycondensation reaction in the presence of the auxiliary raw materials, and, in some cases, a chain extension reaction is performed after the polycondensation reaction to enhance the mechanical properties of the biodegradable polyester composition.

However, due to the influence of the branching agent and the chain extension reaction, when macromolecules or aggregates are present in the final biodegradable polyester composition, the cooling crystallization temperature increases and the tear strength in the longitudinal direction is reduced.

Meanwhile, the physical properties of the final biodegradable polyester resin composition also vary depending on the content ratio of the auxiliary raw materials.

**[Disclosure]**

[Technical Problem]

An object of the present invention is to prepare a biodegradable polyester composition in which macromolecules or aggregates are minimized and various physical properties are harmoniously improved.

[Technical Solution]

In one general aspect, a biodegradable polyester resin composition includes a polyester resin containing a residue of a dicarboxylic acid component and a residue of a diol component; titanium (Ti); and phosphorus (P), wherein polyester resin particles having a size of 20 nm or more as measured by DLS are contained in an amount of 10 mass% or less based on the total amount (100 mass%) of the biodegradable polyester resin composition, and a content ratio of titanium (Ti) to phosphorus (P) contained in the biodegradable polyester resin composition satisfies the following Mathematical Formula 1:

$$[\text{Mathematical Formula 1}]$$

$$1 < [A]/[B] < 20$$

wherein [A] represents the weight (ppm) of titanium (Ti), and [B] represents the weight (ppm) of phosphorus (P).

[Advantageous Effects]

The polyester resin according to one embodiment may harmoniously improve various physical properties while minimizing macromolecules or aggregates.

[Best Model

The advantages and features of the technology described below, and methods for achieving them, will become apparent from the embodiments described in detail with reference to the accompanying drawings. However, the implemented forms are not limited to the embodiments disclosed below. Unless otherwise defined, all terms (including technical and scientific terms) used in the present specification may be interpreted as having meanings commonly understood by those skilled in the art. In addition, the terms defined in commonly used dictionaries are not to be interpreted ideally or exaggeratedly unless explicitly defined otherwise.

In the present specification, unless explicitly described to the contrary, "comprising" any components will be understood to imply further inclusion of other components rather than the exclusion of any other components. In addition, unless the context clearly indicates otherwise, singular forms used herein are intended to include plural forms.

In the present specification, the term "residue" (of a component such as a dicarboxylic acid or a diol) refers to a certain portion or unit that is derived from a specific component (compound) and remains in the product resulting from a chemical reaction when the specific component participates in the chemical reaction. Specifically, the "residue" of the dicarboxylic acid component and the "residue" of the diol component refer to a portion derived from the dicarboxylic acid component and a portion derived from the diol component, respectively, in the polyester copolymer formed through an esterification reaction and/or a polycondensation reaction.

Based on the above definitions, embodiments of the present invention will be described in detail. However, these embodiments are provided as examples, and the present invention is not limited thereto but is defined by the scope of the claims.

**(Biodegradable polyester resin)**

One embodiment is to prepare a biodegradable polyester composition in which macromolecules or aggregates are minimized and various physical properties are harmoniously improved.

In general, a biodegradable polyester composition is prepared using an aliphatic dicarboxylic acid, an aromatic dicarboxylic acid, and an aliphatic diol as main raw materials, and a branching agent, a titanium (Ti)-based catalyst, and a phosphorus (P)-based thermal stabilizer as auxiliary raw materials.

Specifically, a biodegradable polyester composition is prepared by subjecting the main raw materials to an esterification reaction and a polycondensation reaction in the presence of the auxiliary raw materials, and, in some cases, a chain extension reaction is performed after the polycondensation reaction to enhance the mechanical properties of the biodegradable polyester composition.

(1) In the biodegradable polyester resin, due to the influence of the branching agent and the chain extension reaction, when macromolecules or aggregates are present in the final biodegradable polyester composition, the cooling crystallization temperature increases and the tear strength in the longitudinal direction is reduced.

In this regard, one embodiment provides a biodegradable polyester resin in which the content of macromolecules or aggregates is limited to a specific range.

Herein, the term "tear strength" refers to the degree of resistance of a polymer film to tearing. In general, when a polymer resin composition has a low density, a narrow molecular weight distribution, and a well-balanced molecular orientation between a machine direction and a transverse direction, the tear strength of a polymer film produced from such a polymer resin composition increases.

On the other hand, when macromolecules or aggregates are present in the polymer resin composition, the molecular weight distribution increases and the cooling crystallization temperature becomes nonuniform, which leads to unbalanced molecular orientation during blown film processing due to nonuniform cooling, resulting in reduced tear strength in the machine direction (MD).

When the tear strength of the polymer resin composition is low, a film produced from the composition tends to tear easily during film production. In particular, when a polymer resin composition having low tear strength is used for an agricultural mulching film, tearing of the polymer film may cause damage to crop cultivation.

For reference, gel permeation chromatography (GPC), which is widely known as a method for measuring molecular weight distribution, is used to measure relative molecular weight, and therefore it is difficult to quantify macromolecules or aggregates in the polymer resin composition. On the other hand, dynamic light scattering (DLS) may be used to measure the hydrodynamic diameter of polymers dispersed in the polymer resin composition, and the content of macromolecules or aggregates may be quantified based on the measurement results.

In this regard, in one embodiment, the size of macromolecules or aggregates is determined using DLS.

Specifically, the present inventors have found that, when the content of polyester resin having a size of 20 nm or more as measured by DLS exceeds 10 mass% based on the total amount (100 mass%) of the biodegradable polyester resin composition, the tear strength is significantly reduced.

Accordingly, in one embodiment, the biodegradable polyester resin composition is controlled so that the content of polyester resin having a size of 20 nm or more as measured by DLS is 10 mass% or less based on the total amount (100 mass%) of the composition.

(2) On the other hand, in the biodegradable polyester resin composition, the physical properties of the final biodegradable polyester resin composition also vary depending on the content ratio of the auxiliary raw materials.

In this regard, one embodiment provides a biodegradable polyester resin in which the content ratio of the titanium (Ti)-based catalyst to the phosphorus (P)-based thermal stabilizer is limited to a specific range.

Specifically, the present inventors have found that, in the biodegradable polyester resin composition, when the titanium (Ti)-based catalyst and the phosphorus (P)-based thermal stabilizer do not satisfy the following Mathematical Formula 1, at least one of the physical properties of a polymer film becomes inferior.

Accordingly, in one embodiment, the titanium (Ti)-based catalyst and the phosphorus (P)-based thermal stabilizer in the biodegradable polyester resin composition are controlled so as to satisfy the following Mathematical Formula 1.

$$[\text{Mathematical Formula 1}]$$

$$1 < [A]/[B] < 20$$

In Mathematical Formula 1,

[A] represents the weight (ppm) of titanium (Ti) contained in the titanium (Ti)-based catalyst, and
[B] represents the weight (ppm) of phosphorus (P) contained in the phosphorus (P)-based thermal stabilizer.

Hereinafter, the polyester resin composition according to an embodiment will be described in more detail.

Polyester resin

The dicarboxylic acid component may include an aromatic dicarboxylic acid having 6 to 12 carbon atoms and an aliphatic dicarboxylic acid having 4 to 10 carbon atoms.

The aromatic dicarboxylic acid having 6 to 12 carbon atoms may include terephthalic acid, isophthalic acid, furandicarboxylic acid, naphthalenedicarboxylic acid, a diester derivative thereof, an anhydride thereof, or a mixture thereof.

The aliphatic dicarboxylic acid having 4 to 10 carbon atoms may include adipic acid, succinic acid, glutaric acid, azelaic acid, sebacic acid, a cyclic fatty acid, a diester derivative thereof, an anhydride thereof, or a mixture thereof.

The dicarboxylic acid component may include 30 to 70 mol% of the aromatic dicarboxylic acid having 6 to 12 carbon atoms and 30 to 70 mol% of the aliphatic dicarboxylic acid having 4 to 10 carbon atoms, based on the total amount of the dicarboxylic acid component.

The aliphatic diol may include an aliphatic diol having 2 to 10 carbon atoms.

The aliphatic diol having 2 to 10 carbon atoms may include 1,4-butanediol, 1,2-butanediol, ethylene glycol, 1,2-propanediol, 1,3-propanediol, 1,5-pentanediol, 1,6-hexanediol, 2,2-dimethyl-1,3-propanediol, cyclic aliphatic diols, or a mixture thereof.

A molar ratio of the dicarboxylic acid component to the diol component may be 1.0:0.8 to 1.0:1.2.

Branching agent

The crosslinking may be formed by a branching agent having three or more crosslinkable functional groups.

The branching agent may have, as crosslinkable functional groups, a hydroxyl group (-OH), a carboxyl group (-COOH), or an anhydride. Specifically, examples of the branching agent include glycerol, trimethylolpropane, and pentaerythritol.

Titanium (Ti)-based catalyst

The titanium (Ti)-based catalyst may include a titanium (Ti)-based esterification catalyst, a titanium (Ti)-based polycondensation catalyst, or a combination thereof.

The titanium (Ti)-based esterification catalyst may include an organic acid chelate titanium compound and an inorganic titanium compound. The titanium (Ti)-based esterification catalyst may be contained in an amount of 20 to 150 ppm based on the weight of titanium (Ti) contained in the titanium (Ti)-based esterification catalyst.

The titanium (Ti)-based polycondensation catalyst may include titanium tetraalkoxide compounds or a combination thereof. The titanium (Ti)-based polycondensation catalyst may be contained in an amount of 50 to 150 ppm based on the weight of titanium (Ti) contained in the titanium (Ti)-based polycondensation catalyst.

Phosphorus (P)-based thermal stabilizer

The phosphorus (P)-based thermal stabilizer may be contained in an amount of 5 to 200 ppm based on the weight of phosphorus (P) contained in the phosphorus (P)-based thermal stabilizer.

The phosphorus (P)-based thermal stabilizer may include trimethyl phosphonoacetate, triethyl phosphonoacetate, phosphoric acid, phosphorous acid, polyphosphoric acid, trimethyl phosphate (TMP), triethyl phosphate, trimethyl phosphine, triphenyl phosphine, or a mixture thereof.

Physical properties of biodegradable polyester composition

The biodegradable polyester resin composition may have a melt flow index (MI) of 5 g/10 min or less as measured at 190°C under a load of 2.16 kg in accordance with the ASTM D1238 standard.

The biodegradable polyester resin composition may have an acid value of 2.5 mgKOH/g or less as measured in accordance with the ASTM D664 standard after analysis by potentiometric titration.

**(Method for preparing biodegradable polyester composition)**

One embodiment provides a method for harmoniously improving various physical properties of a final biodegradable polyester composition while minimizing macromolecules or aggregates in the final biodegradable polyester composition.

A branching agent, a titanium (Ti)-based catalyst, and a phosphorus (P)-based thermal stabilizer are added, respectively, in at least one of the first to third steps, and the titanium (Ti)-based catalyst and the phosphorus (P)-based thermal stabilizer remaining in the fourth step may be controlled to satisfy Mathematical Formula 1.

In addition, the content of polyester resin having a size of 20 nm or more may be controlled to be 10 mass% or less based on the total amount (100 mass%) of the biodegradable polyester resin composition obtained in the fourth step.

Accordingly, the finally obtained biodegradable polyester composition may be the same as that described in the above embodiment.

Hereinafter, a preparation method according to one embodiment will be described step by step, and a repeated description of the above contents will be omitted.

First step

In the first step, a raw material mixture containing a dicarboxylic acid component and a diol component is prepared.

The second step may be performed in an esterification reactor.

Second step

In the second step, the raw material mixture is reacted to prepare an oligomer.

In order to prevent thermal decomposition during the second step, the reaction should be efficiently performed within a short time. When the reaction temperature in the second step is too low, the residence time increases and unreacted materials may be generated, whereas when the reaction temperature is too high, among the reactants, the diol, particularly 1,4-butanediol, undergoes decomposition to form THF, such that 1,4-butanediol cannot sufficiently participate in the reaction, which may also lead to the generation of unreacted materials.

In this regard, the second step may be performed at a temperature range of 130 to 230°C, such that macromolecules or aggregates in the final biodegradable polyester composition may be minimized.

Specifically, in the second step, the raw material mixture is heated to reach a temperature of 130 to 230°C to perform an esterification reaction, and water ($H_2O$), which is a by-product, and side reaction products are removed from the system through a rectifying column or by applying a low vacuum to obtain an oligomer.

Third step

In the third step, the oligomer may be polycondensed to prepare a prepolymer.

In order to prevent thermal decomposition during the third step, the reaction should be efficiently performed within a short time. When the reaction temperature in the third step is too high, a thermal decomposition reaction may become predominant over the polycondensation reaction, resulting not only in the formation of decomposition products but also in an increased residence time.

Meanwhile, when the stirring is performed excessively fast in the third step to increase stirring efficiency, decomposition may occur due to high shear stress generated by the stirring. On the other hand, when the stirring is performed excessively slowly, the molecular weight distribution may broaden due to a non-uniform polycondensation reaction, and macromolecules or aggregates may be generated.

In this regard, the third step may be performed at a temperature range of 210 to 250°C and a stirring speed of 20 to 60 rpm, such that macromolecules or aggregates in the final biodegradable polyester composition may be minimized.

Accordingly, a prepolymer having a melt flow index (MI) of 5 to 60 g/10 min as measured at 190°C under a load of 2.16 kg in accordance with the ASTM D1238 standard may be obtained.

Fourth step

In the fourth step, a chain extender may be added to the prepolymer to further increase the viscosity, thereby obtaining a polyester resin composition.

In the fourth step, when the prepolymer and the chain extender are mixed at a high speed or under high shear to promote a smooth reaction therebetween, decomposition may occur due to increased shear stress, and when the reaction is performed at a high temperature, thermal decomposition may also occur, resulting in a sharp increase in the molecular weight distribution of the final biodegradable polyester.

Accordingly, it is preferable that the fourth step is performed at a temperature range of 120 to 250°C for 1 to 30 minutes using a static mixer or a dynamic mixer.

Titanium (Ti)-based catalyst

In the first step, the titanium (Ti)-based catalyst is partially or entirely added, such that macromolecules or aggregates in the final biodegradable polyester composition may be minimized.

Specifically, the titanium (Ti)-based esterification catalyst is added in the first step, such that the catalyst may be uniformly dispersed at a lower temperature than the esterification reaction temperature. As described above, the titanium (Ti)-based esterification catalyst is uniformly dispersed at a low temperature and then the esterification reaction is performed, such that an oligomer having a uniform size may be prepared, and unreacted material may be prevented.

More specifically, the titanium (Ti)-based catalyst may be added to the raw material mixture in the first step in an amount of 5 to 100 wt% based on the total amount of the titanium (Ti)-based catalyst, and the remainder may be added in the second step.

When the titanium (Ti)-based catalyst is not added at all in the first step and the entire amount of the titanium (Ti)-based catalyst is added in the second step, a locally high concentration of the catalyst may occur in the second step, which induces side reactions, thereby generating macromolecules or aggregates resulting from generation of decomposition products due to the side reactions and resulting in a broad molecular weight distribution due to a non-uniform oligomer formation reaction.

Still more specifically, the titanium (Ti)-based catalyst includes a titanium (Ti)-based esterification catalyst, a titanium (Ti)-based polycondensation catalyst, or a combination thereof. The titanium (Ti)-based esterification catalyst may be entirely added in the first step or separately added in the first step and the second step, and the titanium (Ti)-based polycondensation catalyst may be added in the latter stage of the second step or the early stage of the third step.

Phosphorus (P)-based thermal stabilizer

In the second and third steps, the entire amount of the phosphorus (P)-based thermal stabilizer may be added.

Specifically, the phosphorus (P)-based thermal stabilizer may be added during the second step, in the latter stage of the second step or the early stage of the third step. However, the phosphorus (P)-based thermal stabilizer may not be added simultaneously with the titanium (Ti)-based catalyst. When the phosphorus (P)-based thermal stabilizer is added simultaneously with the titanium (Ti)-based catalyst, the activity of the titanium (Ti)-based catalyst may decrease, thereby delaying the esterification reaction and/or the polycondensation reaction, inducing decomposition of the prepolymer, and resulting in a broadened molecular weight distribution and formation of macromolecules.

The phosphorus (P)-based thermal stabilizer may be added in an amount of 5 to 200 ppm based on the weight of phosphorus (P) contained in the phosphorus (P)-based thermal stabilizer. An appropriate amount of the phosphorus (P)-based thermal stabilizer is added, such that thermal decomposition may be prevented without reducing the activity of the catalyst. The types of the phosphorus (P)-based thermal stabilizer are as described above.

Branching agent

In the first to third steps, the entire amount of the branching agent may be added to improve processability and physical properties during film production.

Specifically, the branching agent may be added to the raw material mixture in the first step, during the reaction in the second step, in the latter stage of the second step, or in the latter stage of the third step.

The branching agent may be added in the raw material slurry preparation step, during the esterification reaction, in the latter stage of the esterification reaction, or in the early stage of the polycondensation reaction.

When the branching agent is added in an excessive amount, macromolecules or aggregates may be generated, and a preferred amount of the branching agent is in a range of 10 to 3,000 ppm. The types of the branching agent are as described above.

Final product

The polyester resin having a size of 20 nm or more may be contained in an amount of 10 mass% or less based on the total amount (100 mass%) of the biodegradable polyester resin composition. Detailed description thereof is as described above.

[Mode for Invention]

Hereinafter, the present invention will be described with reference to Examples. However, the following Examples are provided by way of example only and the scope of the present invention is not limited thereto.

**Example 1**

(1) Preparation of biodegradable polyester resin composition

First step: Terephthalic acid (TPA), adipic acid (AA), and 1,4-butanediol (BD) were added, an esterification catalyst was added according to the type and amount shown in Table 1, and a raw material mixture was prepared under stirring.

Second step: The raw material mixture obtained in the first step was reacted while increasing the reaction temperature to 230°C and removing the generated effluent water through a rectifying column, thereby preparing an oligomer.

Third step: A phosphorus-based thermal stabilizer, a branching agent, a polycondensation catalyst tetrabutyl titanate (TBT) were added according to the type and amount shown in Table 1. While the reaction temperature was increased for 1 hour as shown in Table 1, the pressure in the reactor was gradually reduced to 1 torr or less, the by-products and excess butanediol were removed, and the reaction was terminated upon reaching the discharge load, thereby obtaining a prepolymer. The MI of the obtained prepolymer is shown in Table 1.

Fourth step: The obtained biodegradable polyester prepolymer was dried and then subjected to a chain extension process using a mixer under the conditions shown in Table 1, thereby obtaining a final biodegradable polyester resin composition.

**Examples 2 to 14**

Biodegradable polyester resin compositions were prepared by changing the raw materials or processes as shown in Tables 1 to 3.

**Comparative Examples 1 to 12**

Biodegradable polyester resin compositions were prepared by changing the raw materials or processes as shown in Tables 4 to 6.

**Experimental Example 1: Physical properties of biodegradable polyester resin composition**

The physical properties of the biodegradable polyester resin composition samples of the Examples and Comparative Examples were evaluated by the following methods, and the results are shown in Tables 1 to 6.

MI: After sample loading, the weight of the polyester extruded through an orifice of a capillary rheometer was measured under a load of 2.16 kg at 190°C for 10 minutes, in accordance with the ASTM D1238 standard.

Acid value: After analysis by potentiometric titration, the acid value was calculated in accordance with the ASTM D664 standard.

Molecular weight distribution (PDI): The molecular weight distribution was measured by gel permeation chromatography (GPC, Technology 1200 Series, Agilent Technologies) using chloroform as a solvent and polystyrene as a standard material. The measurement was performed at a column and detector temperature of 40°C and a flow rate of 1 mL/min.

Molecule size: The molecular size was measured using a DLS instrument (model name: Nanostar, Wyatt Technology Corporation) at a wavelength of 661 nm. The sample was dissolved in chloroform at a concentration of 1.0 mg/mL for measurement.

**Experimental Example 2: Physical properties of biodegradable polyester resin film**

Biodegradable polyester resin films of the Examples and Comparative Examples were prepared, the physical properties were evaluated by the following methods, and the results are shown in Tables 1 to 6.

The final biodegradable polyester resin composition was extruded using a single-sheet extruder to prepare a 50 $\mu$m film.

The tear strength of the prepared film was measured in accordance with the ASTM D1004 standard. The measurement was performed using a UTM 4520 tensile tester available from Instron under conditions of a temperature of 23°C, a relative humidity of 50%, and a tensile speed of 500 mm/min, and the tear strength in the longitudinal direction of the film was expressed as the MD tear strength.

[Table 1]

| Classification | | | Unit | Example 1 | Example 2 | Example 3 | Example 4 | Example 5 |
|---|---|---|---|---|---|---|---|---|
| Composit Raw ion | Raw material | TPA | kg | 480 | 480 | 480 | 480 | 480 |
| | | AA | kg | 490 | 490 | 490 | 490 | 490 |
| | | BD | kg | 850 | 850 | 850 | 850 | 850 |
| | ES catalyst | Type | - | Catalyst 1 | Catalyst 2 | Catalyst 1 | Catalyst 2 | Catalyst 2 |
| | | Added amount | kg | 3 | 2 | 3 | 2 | 2 |
| | | Time of addition | - | At the time of raw material addition | At the time of raw material addition | At the time of raw material addition | At the time of raw material addition | At the time of raw material addition |
| | PC catalyst | Type | - | TBT | TBT | TBT | TBT | TBT |
| | | Added amount | kg | 1.3 | 1.3 | 1.3 | 1.3 | 1.3 |
| | | Time of addition | | Early stage of poly-condensa tion reac-tion | Early stage of poly-condensa tion reac-tion | Early stage of poly-condensa tion reac-tion | Early stage of poly-condensa tion reac-tion | Early stage of poly-condensa tion reac-tion |
| | Phosphorus-b ased thermal stabilizer | Type | - | Phosphorous acid | Phosphorous acid | Phosphoric acid | TEP | TEP |
| | | Added amount | kg | 0.3 | 0.3 | 0.4 | 0.6 | 0.6 |
| | | Time of addition | - | At the end of ES | At the end of ES | At the end of ES | At the end of ES | At the end of ES |
| | Ti/P ratio | | - | 2.4 | 2.5 | 2.2 | 2.8 | 2.8 |
| | Branching agent | Type | - | PTT | PTT | PTT | PTT | Glycerol |
| | | Added amount | kg | 1.3 | 1 | 0.5 | 1.3 | 1.3 |
| | | Time of addition | - | At the end of ES | At the end of ES | At the end of ES | At the end of ES | At the end of ES |

(continued)

| Classification | | | Unit | Example 1 | Example 2 | Example 3 | Example 4 | Example 5 |
|---|---|---|---|---|---|---|---|---|
| Process | Esterification reaction | Temperature | °C | 230 | 230 | 230 | 230 | 230 |
| | | Residence time | hr | 4 | 3.5 | 3.5 | 4 | 4 |
| | Polycondensation reaction | Temperature | °C | 240 | 240 | 240 | 240 | 240 |
| | | Stirring speed | rpm | 50 | 50 | 50 | 50 | 50 |
| | | Residence time | hr | 3 | 3.3 | 3.3 | 4 | 3.3 |
| | | Temperature | °C | 180 | 180 | 180 | 180 | 180 |
| | | Type of chain extender | - | HDI | HDI | HDI | HDI | HDI |
| | | Added amount of chain extender | wt% | 0.5 | 0.5 | 0.5 | 0.5 | 0.5 |
| | | Residence time | min | 10 | 10 | 10 | 10 | 10 |
| | | Prepolymer MI | g/10 min | 40 | 30 | 35 | 20 | 25 |
| | | MI of the final polyester | g/10 min | 4.2 | 3.5 | 3.3 | 3.1 | 4.0 |
| Physical properties of polyester | | Acid value | mgKOH/g | 1.05 | 0.96 | 1.1 | 0.95 | 1.23 |
| | | PDI | - | 2.86 | 2.65 | 2.9 | 2.77 | 2.6 |
| | | Mass% of molecules having size of 20 nm or more | % | 4.9 | 4.1 | 7.9 | 6.3 | 3.6 |
| Physical properties of film | | Tear strength MD | N/mm | 35.3 | 35.3 | 28.4 | 30.4 | 32.3 |

[Table 2]

| Classification | | | Unit | Example 6 | Example 7 | Example 8 | Example 9 | Example 10 |
|---|---|---|---|---|---|---|---|---|
| Composition | Raw material | TPA | kg | 480 | 480 | 480 | 480 | 480 |
| | | AA | kg | 490 | 490 | 490 | 490 | 490 |
| | | BD | kg | 850 | 850 | 850 | 850 | 850 |
| | ES catalyst | Type | - | Catalyst 1 | Catalyst 2 | Catalyst 2 | Catalyst 1 | Catalyst 2 |
| | | Added amount | kg | 3 | 2 | 2 | 3 | 2 |
| | | Time of addition | - | At the time of raw material addition | At the time of raw material addition | At the time of raw material addition | At the time of raw material addition | At the time of raw material addition |
| | PC catalyst | Type | - | TBT | TBT | TBT | TBT | TBT |
| | | Added amount | kg | 1.3 | 1.3 | 1.3 | 1.3 | 1.3 |
| | | Time of addition | - | Early stage of polycondens ation | Early stage of polycondens ation | Early stage of polycondens ation | Early stage of polycondens ation | Early stage of polycondens ation |
| | Phosphorus-ba sed thermal stabilizer | Type | - | TEP | TEP | TEP | TEP | TEP |
| | | Added amount | kg | 0.6 | 0.6 | 0.6 | 0.6 | 0.6 |
| | | Time of addition | - | At the end of ES | At the end of ES | At the end of ES | At the end of ES | At the end of ES |
| | Ti/P ratio | | - | 2.7 | 2.8 | 2.8 | 2.7 | 2.8 |
| | Branching agent | Type | - | TMP | PTT | Glycerol | TMP | PTT |
| | | Added amount | kg | 1.4 | 0.5 | 1 | 1 | 1.3 |
| | | Time of addition | - | At the end of ES | At the end of ES | At the end of ES | At the end of ES | At the end of ES |

(continued)

| Classification | | | Unit | Example 6 | Example 7 | Example 8 | Example 9 | Example 10 |
|---|---|---|---|---|---|---|---|---|
| Process | Esterificatio n reaction | Temperature | °C | 230 | 230 | 230 | 230 | 220 |
| | | Residence time | hr | 3.5 | 3.5 | 4 | 4 | 4.5 |
| | Polycondensat ion reaction | Temperature | °C | 240 | 240 | 240 | 240 | 240 |
| | | Stirring speed | rpm | 50 | 50 | 50 | 50 | 50 |
| | | Residence time | hr | 3 | 3.5 | 4 | 4 | 4 |
| | | Temperature | °C | 180 | 180 | 180 | 180 | 180 |
| | | Type of chain extender | - | HDI | HDI | HDI | HDI | HDI |
| | | Added amount of chain extender | wt% | 0.5 | 0.5 | 0.5 | 0.5 | 0.5 |
| | | Residence time | min | 10 | 10 | 10 | 10 | 10 |
| Physical properties of polyester | Prepolymer MI | | g/10 min | 40 | 30 | 20 | 20 | 20 |
| | MI of the final polyester | | g/10 min | 3.7 | 3.7 | 3.0 | 3.1 | 3.6 |
| | Acid value | | mgKOH/ g | 1.18 | 1.12 | 1.33 | 1.25 | 1.07 |
| | PDI | | - | 2.72 | 2.64 | 2.61 | 2.66 | 2.82 |
| | Mass% of molecules having size of 20 nm or more | | % | 4.5 | 2.7 | 3.2 | 4.0 | 5.2 |
| Physical properties of film | Tear strength | MD | N/mm | 34.3 | 47.0 | 40.2 | 34.3 | 26.5 |

[Table 3]

| Classification | | | Unit | Example 11 | Example 12 | Example 13 | Example 14 |
|---|---|---|---|---|---|---|---|
| Compositi on | Raw material | TPA | kg | 480 | 480 | 480 | 480 |
| | | AA | kg | 490 | 490 | 490 | 490 |
| | | BD | kg | 850 | 850 | 850 | 850 |
| | ES Catalyst | Type | - | Catalyst 1 | Catalyst 1 | Catalyst 2 | Catalyst 2 |
| | | Added amount | kg | 3 | 3 | 2 | 2 |
| | | Time of addition | - | At the time of raw material addition | At the time of raw material addition | At the time of raw material addition | At the time of raw material addition |
| | PC Catalyst | Type | - | TBT | TBT | TBT | TBT |
| | | Added amount | kg | 1.3 | 1.3 | 1.3 | 1.3 |
| | | Time of addition | - | Early stage of polycondensati on reaction | Early stage of polycondensati on reaction | Early stage of polycondensati on reaction | Early stage of polycondensati on reaction |
| | Phosphorus-bas ed thermal stabilizer | Type | - | Phosphorous acid | Phosphoric acid | TEP | Phosphorous acid |
| | | Added amount | kg | 0.3 | 0.4 | 0.6 | 0.3 |
| | | Time of addition | - | At the end of ES | At the end of ES | At the end of ES | At the end of ES |
| | Ti/P ratio | | - | 2.4 | 2.2 | 2.8 | 2.5 |
| | Branching agent | Type | - | PTT | PTT | PTT | PTT |
| | | Added amount | kg | 1.3 | 1.3 | 1.3 | 1 |
| | | Time of addition | - | At the end of ES | At the end of ES | At the end of ES | At the end of ES |
| Process | Esterification reaction | Temperatu re | °C | 230 | 230 | 230 | 230 |
| | | Residence time | hr | 3.5 | 3.5 | 4 | 4 |
| | Polycondensati on reaction | Temperatu | °C | 240 | 240 | 240 | 240 |
| | | Stirring speed | rpm | 40 | 30 | 50 | 50 |

| Classification | | | Unit | Example 11 | Example 12 | Example 13 | Example 14 |
|---|---|---|---|---|---|---|---|
| | | Residence time | hr | 3.5 | 4.3 | 3.5 | 3 |
| | | Temperatu re | °C | 180 | 180 | 170 | 190 |
| | | Type of chain extender | - | HDI | HDI | HDI | HDI |
| | | Added amount of chain extender | wt% | 0.5 | 0.5 | 0.5 | 0.5 |
| | | Residence time | min | 10 | 10 | 10 | 10 |
| Physical propertie s of polyester | Prepolymer MI | | g/10 min | 30 | 15 | 25 | 20 |
| | MI of the final polyester | | g/10 min | 3.1 | 2.6 | 2.8 | 2.8 |
| | Acid value | | mgKOH/g | 1.05 | 1.17 | 1.00 | 1.16 |
| | PDI | | - | 2.73 | 2.91 | 2.75 | 2.79 |
| | Mass% of molecules having size of 20 nm or more | | % | 4.9 | 6.5 | 5.8 | 4.3 |
| Physical propertie s of film | Tear strength | MD | N/mm | 36.3 | 23.5 | 24.5 | 39.2 |

EP 4 729 555 A1

[Table 4]

| Classification | | | Unit | Comparative Example 1 | Comparative Example 2 | Comparative Example 3 | Comparative Example 4 | Comparative Example 5 |
|---|---|---|---|---|---|---|---|---|
| Composition | Raw material | TPA | kg | 480 | 480 | 480 | 480 | 480 |
| | | AA | kg | 490 | 490 | 490 | 490 | 490 |
| | | BD | kg | 850 | 850 | 850 | 850 | 850 |
| | ES catalyst | Type | - | TBT (215) | Catalyst 2 | Catalyst 1 | Catalyst 2 | Catalyst 2 |
| | | Added amount | kg | 0.7 | 2 | 3 | 2 | 2 |
| | | Time of addition | - | Early stage of ester reaction | At the time of raw material addition | At the time of raw material addition | At the time of raw material addition | At the time of raw material addition |
| | PC catalyst | Type | - | TBT | TBT | TBT | TBT | TBT |
| | | Added amount | kg | 1.3 | 1.3 | 1.3 | 1.3 | 1.3 |
| | | Time of addition | - | Early stage of polycondensa tion reaction | Early stage of polycondensa tion reaction | Early stage of polycondensa tion reaction | Early stage of polycondensa tion reaction | Early stage of poly-condensa tion reaction |
| | Phosphorus-based thermal stabilizer | Type | - | TEP | Phosphorous acid | Phosphorous acid | Phosphorous acid | Phosphorous acid |
| | | Added amount | kg | 0.6 | 0.3 | 0.3 | 0.3 | 0.3 |
| | | Time of addition | | At the end of ES | At the end of ES | At the end of ES | At the end of ES | At the end of ES |
| | Ti/P ratio | | - | 2.8 | 2.5 | 2.4 | 2.5 | 2.5 |
| | Branching agent | Type | - | PTT | PTT | PTT | PTT | PTT |
| | | Added amount | kg | 1.3 | 5 | 1.3 | 1 | 1 |
| | | Time of addition | - | At the end of ES | At the end of ES | At the end of ES | At the end of ES | At the end of ES |

| Classification | | | Unit | Comparative Example 1 | Comparative Example 2 | Comparative Example 3 | Comparative Example 4 | Comparative Example 5 |
|---|---|---|---|---|---|---|---|---|
| Process | Esterificati on reaction | Temperat ure | °C | 230 | 230 | 240 | 230 | 230 |
| | | Residenc e time | hr | 5.5 | 4 | 3 | 4 | 4 |
| | Polycondensa tion reaction | Temperat ure | °C | 240 | 240 | 240 | 200 | 260 |
| | | Stirring speed | rpm | 50 | 50 | 50 | 50 | 50 |
| | | Residenc e time | hr | 3.5 | 6.5 | 3.5 | 10 | 6 |
| | | Temperat ure | °C | 180 | 180 | 180 | - | 180 |
| | | Type of chain extender | - | HDI | HDI | HDI | - | HDI |
| | | Added amount of chain extender | wt% | 0.5 | 0.5 | 0.5 | - | 0.5 |
| | | Residenc e time | min | 10 | 10 | 10 | - | 10 |
| Physical properti es of polyeste r | Prepolymer MI | | g/10 | 30 | 20 | 25 | 100 | 25 |
| | MI of the final polyester | | g/10 min | 3.4 | 4.6 | 3 | 100 | 3.3 |
| | Acid value | | mg/KOH/g | 1.9 | 1.05 | 2.26 | 8.07 | 1.43 |
| | PDI | | - | 2.85 | 3.51 | 2.72 | - | 2.88 |
| | Mass% of molecules having size of 20 nm or more | | % | 11 | 14.1 | 11.5 | 12.5 | 12.8 |
| Physical properti es of film | Tear strength | h MD | N/mm | 10.8 | 8.8 | 12.7 | - | 9.8 |

[Table 5]

| Classification | | | Unit | Comparative Example 6 | Comparative Example 7 | Comparative Example 8 | Comparative Example 9 | Comparative Example 10 |
|---|---|---|---|---|---|---|---|---|
| Composition | Raw material | TPA | kg | 480 | 480 | 480 | 480 | 480 |
| | | AA | kg | 490 | 490 | 490 | 490 | 490 |
| | | BD | kg | 850 | 850 | 850 | 850 | 850 |
| | ES catalyst | Type | - | Catalyst 2 | Catalyst 2 | Catalyst 2 | Catalyst 1 | Catalyst 1 |
| | | Added amount | kg | 2 | 2 | 2 | 3 | 3 |
| | | Time of addition | - | At the time of raw material addition | At the time of raw material addition | At the time of raw material addition | At the time of raw material addition | At the time of raw material addition |
| | PC catalyst | Type | - | TBT | TBT | TBT | TBT | TBT |
| | | Added amount | kg | 1.3 | 1.3 | 1.3 | 1.3 | 1.3 |
| | | Time of addition | | Early stage of polycondensa tion reaction | Early stage of polycondensa tion reaction | Early stage of polycondensa tion reaction | Early stage of polycondensa tion reaction | Early stage of polycondensa tion reaction |
| | Phosphorus-b ased thermal stabilizer | Type | - | TEP | TEP | TEP | Phosphorous acid | Phosphorous acid |
| | | Added amount | kg | 0.6 | 0.6 | 0.6 | 0.3 | 0.3 |
| | | Time of addition | | At the end of ES | At the end of ES | At the end of ES | At the end of ES | At the end of ES |
| | Ti/P ratio | | - | 2.8 | 2.8 | 2.8 | 2.4 | 2.4 |
| | Branching agent | Type | - | PTT | PTT | Glycerol | PTT | PTT |
| | | Added amount | kg | 1.3 | 1.3 | 1.3 | 1.3 | 1.3 |
| | | Time of addition | | At the end of ES | At the end of ES | At the end of ES | At the end of ES | At the end of ES |
| | Esterificati on reaction | Temperat ure | °C | 230 | 230 | 230 | 230 | 230 |
| | | Residenc e time | hr | 4 | 3.5 | 4 | 3.5 | 3.5 |

(continued)

| Classification | | | Unit | Comparative Example 6 | Comparative Example 7 | Comparative Example 8 | Comparative Example 9 | Comparative Example 10 |
|---|---|---|---|---|---|---|---|---|
| Process | Polycondensa tion reaction | Temperat ure | °C | 240 | 240 | 240 | 240 | 240 |
| | | Stirring speed | rpm | 80 | 10 | 50 | 50 | 50 |
| | | Residenc e time | hr | 5 | 7 | 5 | 5 | 2.5 |
| | | Temperat ure | °C | 180 | 180 | 180 | 180 | 180 |
| | | Type of chain extender | - | HDI | HDI | HDI | HDI | HDI |
| | | Added amount of chain extender | wt% | 0.5 | 0.5 | 0.5 | 0.5 | 0.8 |
| | | Residenc e time | min | 10 | 10 | 10 | 10 | 10 |
| Physical properti es of polyeste r | Prepolymer MI | | g/10 min | 45 | 15 | 4 | 3.5 | 70 |
| | MI of the final polyester | | g/10 min | 3.8 | 3.1 | 2.5 | 2.6 | 8.3 |
| | Acid value | | mgKOH /g | 1.52 | 1.47 | 4.32 | 2.68 | 1.22 |
| | PDI | | | 3.06 | 3.10 | 2.68 | 3.42 | 2.96 |
| | Mass% of molecules having size of 20 nm or more | | % | 11.7 | 13.6 | 12.9 | 14.2 | 11.3 |
| Physical properti es of film | Tear strength | MD | N/mm | 11.8 | 7.8 | 9.8 | 8.8 | 10.8 |

[Table 6]

| Classification | | | Unit | Comparative Example 11 | Comparative Example 12 | Comparative Example 13 | Comparative Example 14 |
|---|---|---|---|---|---|---|---|
| Composition | Raw material | TPA | kg | 480 | 480 | 480 | 480 |
| | | AA | kg | 490 | 490 | 490 | 490 |
| | | BD | kg | 850 | 850 | 850 | 850 |
| | ES Catalyst | Type | - | Catalyst 2 | Catalyst 2 | Catalyst 2 | Catalyst 2 |
| | | Added amount | kg | 2 | 2 | 3 | 1.5 |
| | | Time of addition | - | At the time of raw material addition | At the time of raw material addition | At the time of raw material addition | At the time of raw material addition |
| | PC Catalyst | Type | - | TBT | TBT | TBT | TBT |
| | | Added amount | kg | 1.3 | 1.3 | 1.3 | 0.65 |
| | | Time of addition | - | Early stage of polycondensation reaction | Early stage of polycondensation reaction | Early stage of polycondensation reaction | Early stage of poly-condensation reaction |
| | Phosphorus-based thermal stabilizer | Type | - | Phosphorous acid | Phosphorous acid | Phosphorous acid | Phosphorous acid |
| | | Added amount | kg | 0.3 | 0.3 | 0.03 | 0.45 |
| | | Time of addition | - | At the end of ES | At the end of ES | At the end of ES | At the end of ES |
| | Ti/P ratio | | - | 2.5 | 2.5 | 24.1 | 0.8 |
| | Branching agent | Type | - | PTT | PTT | PTT | PTT |
| | | Added amount | kg | 1 | 1 | 1 | 1 |
| | | Time of addition | - | At the end of ES | At the end of ES | At the end of ES | At the end of ES |
| Process | Esterification reaction | Temperature | °C | 230 | 230 | 230 | 230 |
| | | Residence time | hr | 4 | 4 | 4 | 4 |
| | Polycondensation reaction | Temperature | °C | 240 | 240 | 240 | 240 |
| | | Stirring speed | rpm | 50 | 50 | 50 | 50 |
| | | Residence time | hr | 3.5 | 3.5 | 7 | 6.5 |

| Classification | | | Unit | Comparative Example 11 | Comparative Example 12 | Comparative Example 13 | Comparative Example 14 |
|---|---|---|---|---|---|---|---|
| | | Temperature | °C | 260 | 115 | 180 | 180 |
| | | Type of chain extender | - | HDI | HDI | HDI | HDI |
| | | Added amount of chain extender | wt% | 0.5 | 0.5 | 0.5 | 0.5 |
| | | Residence time | min | 10 | 10 | 10 | 10 |
| Physical properties of polyester | Prepolymer MI | | g/10 min | 25 | 25 | 25 | 25 |
| | MI of the final polyester | | g/10 min | 2.8 | 17 | 4.2 | 4.6 |
| | Acid value | | mgKOH/ g | 1.54 | 1.18 | 1.32 | 1.67 |
| | PDI | | - | 3.33 | 2.73 | 3.66 | 4.12 |
| | Mass% of molecules having size of 20 nm or more | | % | 14.6 | 11.1 | 15.3 | 14.4 |
| Physical properties of film | Tear strength | MD | N/mm | 5.9 | 6.5 | 5.1 | 5.3 |

The materials used in Tables 1 to 6 are as follows.

BD: 1,4-Butanediol
TPA: Terephthalic acid
AA: Adipic acid
TEP: Triethyl phosphate
TMP: Trimethylol propane
PTT: Pentaerythritol
TBT: Tetrabutyl titanate
Catalyst 1: Inorganic titanium catalyst (SPC-124)
Catalyst 2: Citric acid chelate-based titanium catalyst

According to Tables 1 to 6, when a branching agent, a titanium (Ti)-based catalyst, and a phosphorus (P)-based thermal stabilizer are added, respectively, in at least one of the first to third steps, and the titanium (Ti)-based catalyst and the phosphorus (P)-based thermal stabilizer are controlled to satisfy Mathematical Formula 1, a biodegradable polyester resin composition in which a polyester resin having a size of 20 nm or more is contained in an amount of 10 mass% or less may be obtained, and the tear strength of the biodegradable polyester resin film is enhanced.

Although the preferred embodiments of the present invention have been described in detail above, the scope of the present invention is not limited thereto, and various modifications and improvements made by those skilled in the art using the basic concept of the present invention defined in the following claims also fall within the scope of the present invention.

**Claims**

1. A biodegradable polyester resin composition comprising: a polyester resin containing a residue of a dicarboxylic acid component and a residue of a diol component; titanium (Ti) ; and phosphorus (P),

   wherein polyester resin particles having a size of 20 nm or more as measured by DLS are contained in an amount of 10 mass% or less based on the total amount (100 mass%) of the biodegradable polyester resin composition, and
   a content ratio of titanium (Ti) to phosphorus (P) contained in the biodegradable polyester resin composition satisfies the following Mathematical Formula 1:

$$[Mathematical\ Formula\ 1]$$

$$1 < [A]/[B] < 20$$

   wherein

   [A] represents the weight (ppm) of the titanium (Ti), and
   [B] represents the weight (ppm) of the phosphorus (P).

2. The biodegradable polyester resin composition of claim 1, wherein the dicarboxylic acid component includes an aromatic dicarboxylic acid having 6 to 12 carbon atoms and an aliphatic dicarboxylic acid having 4 to 10 carbon atoms,

   the aromatic dicarboxylic acid having 6 to 12 carbon atoms includes terephthalic acid, isophthalic acid, furandicarboxylic acid, naphthalenedicarboxylic acid, a diester derivative thereof, an anhydride thereof, or a mixture thereof, and
   the aliphatic dicarboxylic acid having 4 to 10 carbon atoms includes adipic acid, succinic acid, glutaric acid, azelaic acid, sebacic acid, a cyclic fatty acid, a diester derivative thereof, an anhydride thereof, or a mixture thereof.

3. The biodegradable polyester resin composition of claim 1, wherein the dicarboxylic acid component contains 30 to 70 mol% of the aromatic dicarboxylic acid having 6 to 12 carbon atoms and 30 to 70 mol% of the aliphatic dicarboxylic acid having 4 to 10 carbon atoms, based on the total amount of the dicarboxylic acid component.

4. The biodegradable polyester resin composition of claim 1, wherein the aliphatic diol includes an aliphatic diol having 2 to 10 carbon atoms, and
the aliphatic diol having 2 to 10 carbon atoms includes 1,4-butanediol, 1,2-butanediol, ethylene glycol, 1,2-propanediol, 1,3-propanediol, 1,5-pentanediol, 1,6-hexanediol, 2,2-dimethyl-1,3-propanediol, cyclic aliphatic diols, or a mixture thereof.

5. The biodegradable polyester resin composition of claim 1, wherein a molar ratio of the dicarboxylic acid component to the diol component is 1.0:0.8 to 1.0:1.2.

6. The biodegradable polyester resin composition of claim 1, wherein the crosslinking is formed by a branching agent having three or more crosslinkable functional groups.

7. The biodegradable polyester resin composition of claim 1, wherein the titanium (Ti) is derived from a titanium (Ti)-based esterification catalyst, a titanium (Ti)-based polycondensation catalyst, or a combination thereof.

8. The biodegradable polyester resin composition of claim 7, wherein the titanium (Ti) contained in the biodegradable polyester resin composition is derived from 0 to 150 ppm of the titanium (Ti)-based esterification catalyst and 50 to 150 ppm of the titanium (Ti)-based polycondensation catalyst.

9. The biodegradable polyester resin composition of claim 1, wherein the phosphorus (P) is derived from a phosphorus (P)-based thermal stabilizer.

10. The biodegradable polyester resin composition of claim 9, wherein the phosphorus (P) is derived from 5 to 200 ppm of the phosphorus (P)-based thermal stabilizer.

11. The biodegradable polyester resin composition of claim 1, wherein the biodegradable polyester resin composition has a melt flow index (MI) of 5 g/10 min or less as measured at 190°C under a load of 2.16 kg in accordance with the ASTM D1238 standard.

12. The biodegradable polyester resin composition of claim 1, wherein the biodegradable polyester resin composition has an acid value of 2.5 mgKOH/g or less as measured in accordance with the ASTM D664 standard after analysis by potentiometric titration.

13. A method for preparing a biodegradable polyester resin composition, the method comprising:

a first step of preparing a raw material mixture containing a dicarboxylic acid component and a diol component;
a second step of reacting the raw material mixture to prepare an oligomer;
a third step of polycondensing the oligomer to prepare a prepolymer; and
a fourth step of adding a chain extender to the prepolymer to obtain a polyester resin composition,
wherein a branching agent, a titanium (Ti)-based catalyst, and a phosphorus (P)-based thermal stabilizer are added, respectively, in at least one of the first to third steps,
in the fourth step, polyester resin particles having a size of 20 nm or more are contained in an amount of 10 mass% or less based on the total amount (100 mass%) of the polyester resin composition, and
in the fourth step, a content ratio of titanium (Ti) to phosphorus (P) contained in the biodegradable polyester resin composition satisfies the following Mathematical Formula 1,

[Mathematical Formula 1]

$$1 < [A]/[B] < 20$$

wherein

[A] represents the weight (ppm) of the titanium (Ti), and
[B] represents the weight (ppm) of the phosphorus (P).

14. The method of claim 13, wherein the second step is performed at a temperature range of 130 to 230°C.

15. The method of claim 13, wherein the prepolymer obtained in the third step has a melt flow index (MI) of 5 to 60 g/10 min as measured at 190°C under a load of 2.16 kg in accordance with the ASTM D1238 standard.

16. The biodegradable polyester resin composition of claim 13, wherein the fourth step is performed at a temperature range of 120 to 250°C for 1 to 30 minutes using a static mixer or a dynamic mixer.

17. The polyester resin composition of claim 13, wherein in the second and third steps, the entire amount of the phosphorus (P)-based thermal stabilizer is added.

18. The polyester resin composition of claim 13, wherein in the first to third steps, the entire amount of the branching agent is added.

## INTERNATIONAL SEARCH REPORT

| International application No. |
| --- |
| **PCT/KR2024/006900** |

| A. | CLASSIFICATION OF SUBJECT MATTER |
| --- | --- |

**C08G 63/16**(2006.01)i; **C08G 63/78**(2006.01)i; **C08G 63/85**(2006.01)i; **C08K 5/49**(2006.01)i

According to International Patent Classification (IPC) or to both national classification and IPC

| B. | FIELDS SEARCHED |
| --- | --- |

Minimum documentation searched (classification system followed by classification symbols)

C08G 63/16(2006.01); B32B 27/10(2006.01); C08B 1/00(2006.01); C08G 63/12(2006.01); C08G 63/78(2006.01); C08G 63/82(2006.01); C08J 5/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 생분해성 폴리에스테르 (biodegradable polyester), 디카르복시산 (dicarboxylic acid), 디올 (diol), 폴리에스테르 수지 (polyester resin), 티타늄 (Titanium, Ti), 인 (Phosphorus, P)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2015-0078271 A (LOTTE FINE CHEMICAL CO., LTD.) 08 July 2015 (2015-07-08) See claims 1 and 5; paragraphs [0013] and [0029]-[0101]; and tables 1 and 2. | 1-18 |
| A | KR 10-2014-0024503 A (LOTTE FINE CHEMICAL CO., LTD.) 03 March 2014 (2014-03-03) See claims 1-10. | 1-18 |
| A | KR 10-2011-0007186 A (BASF SE) 21 January 2011 (2011-01-21) See claims 1-3. | 1-18 |
| A | KR 10-2023-0056491 A (SK LEAVEO CO., LTD.) 27 April 2023 (2023-04-27) See paragraphs [0167], [0181], [0335], [0336] and [0343]. | 1-18 |
| A | KR 10-2022-0063901 A (SK LEAVEO CO., LTD.) 18 May 2022 (2022-05-18) See paragraphs [0105]-[0116]. | 1-18 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 September 2024** | **04 September 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/006900**

| Patent document cited in search report | | | Publication date (day/month/year) | Patent family member(s) | | | Publication date (day/month/year) |
|---|---|---|---|---|---|---|---|
| KR | 10-2015-0078271 | A | 08 July 2015 | AU | 2014-374626 | A1 | 19 May 2016 |
| | | | | AU | 2014-374626 | A1 | 09 July 2015 |
| | | | | AU | 2014-374626 | A2 | 30 June 2016 |
| | | | | AU | 2014-374626 | A2 | 09 July 2015 |
| | | | | CN | 105849150 | A | 10 August 2016 |
| | | | | EP | 3091046 | A1 | 09 November 2016 |
| | | | | EP | 3091046 | A4 | 09 August 2017 |
| | | | | JP | 2017-500380 | A | 05 January 2017 |
| | | | | KR | 10-2015-0078270 | A | 08 July 2015 |
| | | | | US | 2016-0326305 | A1 | 10 November 2016 |
| | | | | WO | 2015-102305 | A1 | 09 July 2015 |
| KR | 10-2014-0024503 | A | 03 March 2014 | AU | 2013-303463 | A1 | 05 February 2015 |
| | | | | AU | 2013-303463 | A1 | 20 February 2014 |
| | | | | AU | 2013-303463 | B2 | 13 October 2016 |
| | | | | CN | 104583270 | A | 29 April 2015 |
| | | | | CN | 104583270 | B | 29 June 2016 |
| | | | | EP | 2886579 | A1 | 24 June 2015 |
| | | | | EP | 2886579 | A4 | 06 April 2016 |
| | | | | JP | 2015-524871 | A | 27 August 2015 |
| | | | | JP | 6218831 | B2 | 25 October 2017 |
| | | | | TW | I606077 | B | 21 November 2017 |
| | | | | TW | 201408717 | A | 01 March 2014 |
| | | | | US | 2015-0158974 | A1 | 11 June 2015 |
| | | | | WO | 2014-027736 | A1 | 20 February 2014 |
| KR | 10-2011-0007186 | A | 21 January 2011 | CN | 102007160 | A | 06 April 2011 |
| | | | | CN | 102007160 | B | 29 May 2013 |
| | | | | EP | 2268704 | A1 | 05 January 2011 |
| | | | | EP | 2628758 | A1 | 21 August 2013 |
| | | | | EP | 2628758 | B1 | 08 October 2014 |
| | | | | JP | 2011-516708 | A | 26 May 2011 |
| | | | | JP | 5675586 | B2 | 25 February 2015 |
| | | | | US | 2011-0034662 | A1 | 10 February 2011 |
| | | | | WO | 2009-127555 | A1 | 22 October 2009 |
| KR | 10-2023-0056491 | A | 27 April 2023 | KR | 10-2671853 | B1 | 04 June 2024 |
| | | | | WO | 2023-068594 | A1 | 27 April 2023 |
| KR | 10-2022-0063901 | A | 18 May 2022 | CN | 113736069 | A | 03 December 2021 |
| | | | | CN | 113736069 | B | 22 September 2023 |
| | | | | EP | 3916036 | A1 | 01 December 2021 |
| | | | | JP | 2021-188038 | A | 13 December 2021 |
| | | | | JP | 7282124 | B2 | 26 May 2023 |
| | | | | KR | 10-2022-0015623 | A | 08 February 2022 |
| | | | | KR | 10-2410615 | B1 | 17 June 2022 |
| | | | | KR | 10-2410620 | B1 | 17 June 2022 |
| | | | | KR | 10-2421034 | B1 | 14 July 2022 |
| | | | | KR | 10-2421044 | B1 | 14 July 2022 |
| | | | | KR | 10-2527599 | B1 | 02 May 2023 |
| | | | | US | 2021-0380757 | A1 | 09 December 2021 |
| | | | | WO | 2021-241931 | A1 | 02 December 2021 |

Form PCT/ISA/210 (patent family annex) (July 2022)